# EUROPÄISCHE PATENTSCHRIFT

(11) **EP 3 405 771 B1**
(45) Veröffentlichungstag und Bekanntmachung des Hinweises auf die Patenterteilung: **02.08.2023**
(21) Anmeldenummer: 17700265.6
(22) Anmeldetag: 09.01.2017
(51) Int. Cl.: G01N 3/46, G01N 3/42

(54) **MESSVORRICHTUNG UND ERFASSUNG VON MESSSIGNALEN WÄHREND EINER EINDRINGBEWEGUNG EINES EINDRINGKÖRPERS**
MEASURING DEVICE AND DETECTION OF MEASUREMENT SIGNALS DURING A PENETRATING MOVEMENT OF A PENETRATING MEMBER
DISPOSITIF DE MESURE POUR LA DÉTECTION DE SIGNAUX DE MESURE PENDANT UN MOUVEMENT DE PÉNÉTRATION D'UN CORPS DE PÉNÉTRATION

(30) Priorität: 18.01.2016 DE 102016100708
(43) Veröffentlichungstag der Anmeldung: 28.11.2018
(73) Patentinhaber: Helmut Fischer GmbH Institut für Elektronik und Messtechnik, 71069 Sindelfingen (DE)
(72) Erfinder: FISCHER, Helmut, 6315 Oberägeri (CH)
(74) Vertreter: Mammel und Maser Patentanwälte PartG mbB
(86) Internationale Anmeldenummer: PCT/EP2017/050306
(87) Internationale Veröffentlichungsnummer: WO 2017/125270

(56) Entgegenhaltungen:
- DE-T2- 69 917 780
- JP-A- 2006 250 557
- US-A- 5 067 346
- US-A1- 2004 011 119
- US-A1- 2009 158 826
- US-A1- 2014 150 562

## Beschreibung

Die Erfindung betrifft eine Messvorrichtung zur Erfassung von Messsignalen während einer Eindringbewegung eines Eindringkörpers in eine Oberfläche eines Prüfkörpers, insbesondere zur Ermittlung der Härte oder der Kratzfestigkeit der Oberfläche des Prüfkörpers.

Aus der JP 2006-250557 A ist eine Messvorrichtung zur Erfassung von Messsignalen während einer Eindringbewegung eines Eindringkörpers in eine Oberfläche eines Prüfkörpers bekannt. Diese Messvorrichtung umfasst eine Krafterzeugungseinrichtung und entfernt dazu einen Eindringkörper. Zwischen dem Eindringkörper und der Krafterzeugungseinrichtung erstreckt sich ein Übertragungsstift, der mit einem Kraftdetektor verbunden ist sowie mit einem weiteren Stift zwischen dem Kraftdetektor und der Krafterzeugungseinrichtung. Dieser weitere Stift ist durch eine Federaufnahmeplatte geführt. Am freien Ende des Eindringkörpers ist der Übertragungsstift durch eine Kugellager-Lagerung in der Bewegungsrichtung der Krafterzeugungseinrichtung auf- und abbewegbar geführt.

Aus der DE 699 17 780 C2 ist eine Messvorrichtung zur Messung der Kratzfestigkeit einer Oberfläche eines Films oder einer Beschichtung eines Prüfkörpers bekannt. Diese Messvorrichtung umfasst einen ersten profilförmigen Körper, an welchem ein piezoelektrischer Antrieb befestigt ist. Dieser greift an einer Platte an, welche über Federelemente mit den offenen C-förmigen Enden des C-profilförmigen Körpers verbunden sind. An dieser Platte ist wiederum ein zweiter C-profilartiger Haltekörper angeordnet, der erneut über Federn eine Halteplatte zu den offenen Enden des C-profilförmigen Körpers beweglich aufnimmt. Am unteren Ende des Haltekörpers ist ein Eindringkörper vorgesehen, der in die Oberfläche des Prüfkörpers eindringt. Eine solche Messvorrichtung ist im Aufbau kompliziert und kostenintensiv. Darüber hinaus werden hohe Massen zwischen dem Antrieb und der Eindringspitze bewegt.

Aus der US 2 620 665 A ist eine Vorrichtung zur Messung der Größe und Form von Oberflächenunregelmäßigkeiten bekannt. Die Messvorrichtung umfasst ein Gehäuse, an welchem ein Paar von Blattfedern befestigt ist. Am jeweiligen freien Ende der Blattfeder ist ein Übertragungsstift vorgesehen, welcher durch die Blattfedern auf und ab bewegbar ist. An einem freien Ende des Übertragungsstifts ist eine Abtastspitze vorgesehen. Am gegenüberliegenden Ende des Übertragungsstiftes ist eine leichtgewichtige Spule vorgesehen, welche beim Abtasten einer Oberflächenrauigkeit eine Lageänderung erfasst.

Aus der US 2004/0011119 A1 ist eine Messvorrichtung zur Messung der Kratzfestigkeit einer Oberfläche bekannt, bei welcher ein Übertragungselement durch zwei parallel zueinander beabstandete Blattfedern in einem Gehäuse gehalten wird. Außerhalb und dem Eindringkörper gegenüberliegend ist eine elektromagnetische Krafterzeugungseinrichtung vorgesehen. Zwischen den beiden Blattfederelementen ist ein kapazitiver Sensor vorgesehen. Das Übertragungselement ist durch die beiden Blattfederelemente auf und ab bewegbar geführt.

Aus der US 2014/0150562 A1 ist ein dreidimensionales Tastinstrument zur mechanischen Abtastung offenbart.

Die US 5,067,346 A offenbart eine Eindringvorrichtung, bei welcher ebenfalls Blattfederelemente zur Führung eines Übertragungsstiftes mit einem daran angeordneten Eindringkörper vorgesehen sind.

Die Druckschrift US 2009/0158826 A1 betrifft eine Materialtestvorrichtung mit einem berührungslosen Sensor, der mit einem Eindringkörper zusammenarbeitet.

Der Erfindung liegt die Aufgabe zugrunde, eine Messvorrichtung zu schaffen, bei welcher zwischen dem Antrieb und dem Eindringkörper eine Anordnung zur Betätigung des Eindringkörpers mit einer geringen Masse ausgebildet wird.

Diese Aufgabe wird durch eine Messvorrichtung gelöst, bei welcher zwischen der Krafterzeugungseinrichtung und dem Eindringkörper ein sich erstreckendes Übertragungselement vorgesehen ist. An einem unteren Randbereich des Gehäuseabschnitts des Gehäuses der Messvorrichtung und zur Krafterzeugungseinrichtung beabstandet ist das Halteelement vorgesehen, welches den Eindringkörper aufnimmt. Zwischen der Kraftübertragungseinrichtung und dem Halteelement im Gehäuseabschnitt des Gehäuses erstreckt sich das Übertragungselement führungsfrei. Ein solches Übertragungselement ist in der Masse gering ausgebildet und kann die durch die Krafterzeugungseinrichtung erzeugte Druckbewegung unmittelbar auf den Eindringkörper übertragen.

Dieses sich vom Eindringkörper bis zur Krafterzeugungseinrichtung erstreckende Übertragungselement mit einer geringen Masse kann beispielsweise in einer Messvorrichtung zur Erfassung einer Eindringbewegung eines Eindringkörpers in eine Oberfläche eines Prüfkörpers, wie beispielsweise einer Härtemessvorrichtung, oder in einer Messvorrichtung zur Ermittlung der Kratzfestigkeit der Oberfläche des Prüfkörpers eingesetzt werden. Alternativ kann diese Messvorrichtung auch für eine Abtastbewegung des Eindringkörpers auf der Oberfläche des Prüfkörpers vorgesehen sein, um beispielsweise eine Rauhigkeitsmessung durchzuführen oder eine Lageerkennung der Oberfläche des Prüfkörpers zu erfassen oder einen sogenannten Pre- und/oder Post-Scan bei der Kratzfestigkeitsermittlung der Oberfläche eines Prüfkörpers durchzuführen.

Des Weiteren ist an einem Gehäuseabschnitt des Gehäuses ein erstes Sensorelement einer ersten Messeinrichtung vorgesehen, welche berührungslos zu einem zweiten Sensorelement der ersten Messeinrichtung angeordnet ist, das an dem Übertragungselement befestigt ist. Diese erste Messeinrichtung erfasst beispielsweise eine Eindringbewegung des Eindringkörpers und ist vorzugsweise als Abstandssensor ausgebildet. Dabei wird dasjenige Sensorelement an dem Übertragungsstift befestigt, welches die geringere Masse aufweist, um die gesamte Masse der bewegten Elemente niederzuhalten.

Bevorzugt ist das Übertragungselement stab- oder stiftförmig ausgebildet. Dadurch wird ein drucksteifes Übertragungselement geschaffen, welches die durch die Krafterzeugungseinrichtung bewirkte Eindringbewegung direkt auf den Eindringkörper überträgt. Dieses stab- oder stiftförmige Übertragungselement kann sowohl in einem Vollquerschnitt als auch Hohlkörper ausgebildet sein. Ebenso kann der Übertragungsstift beispielsweise ein U-, H- Profil oder dergleichen aufweisen, um einen biege- beziehungsweise knicksteifen Übertragungsstift auszubilden.

Des Weiteren greift der Übertragungsstift bevorzugt durch ein Verbindungselement an der Krafterzeugungseinrichtung an. Dadurch kann eine einfache und schnelle Anbindung des Übertragungsstiftes vorgesehen sein.

Des Weiteren ist bevorzugt an dem Halteelement, welches den Eindringkörper aufnimmt und am Gehäuse befestigt ist, ein Verbindungselement vorgesehen ist, um den Übertragungsstift am Halteelement zu befestigen oder damit zu koppeln. Dadurch kann in einfacher Weise der Übertragungsstift zwischen der Krafterzeugungseinrichtung und dem Halteelement eingebunden werden und auch austauschbar vorgesehen sein. Zudem wird dadurch bewirkt, dass das Übertragungselement sich durchgehend zwischen der Krafterzeugungseinrichtung und dem Halteelement erstreckt.

Das Verbindungselement an der Krafterzeugungseinrichtung und/oder dem Halteelement ist bevorzugt durch eine Aufnahmebohrung gebildet, in welcher jeweils ein Ende des Übertragungselementes, insbesondere Übertragungsstiftes, aufgenommen ist. Das Übertragungselement ist an oder in dem Verbindungselement vorzugsweise mit einem Befestigungselement fixiert. Dies ermöglicht eine einfache und schnelle Montage des Übertragungsstiftes.

Des Weiteren kann bevorzugt an einem Gehäuseabschnitt des Gehäuses ein erstes Sensorelement einer weiteren Messvorrichtung vorgesehen sein, welches einem zweiten Sensorelement der zweiten Messeinrichtung zugeordnet ist, das wiederum an dem Übertragungselement befestigt ist. Durch diese zweite Messeinrichtung kann beispielsweise eine Ablenkung oder Auslenkung des Übertragungsstiftes in einer Ebene senkrecht zur Längsachse des Übertragungselementes erfasst werden.

Die erste und zweite Messeinrichtung arbeiten bevorzugt kontaktlos, insbesondere berührungslos, so dass die Verfahrbewegung beziehungsweise Hubbewegung zur Erzeugung der Eindringbewegung des Eindringkörpers frei von jeglicher Reibung ist.

Das Halteelement ist als Druckmembran ausgebildet und weist eine Bewegungsfreiheit in zumindest einem Freiheitsgrad auf, der in der Bewegungsrichtung der Krafterzeugungseinrichtung liegt. Dadurch eignet sich diese Messvorrichtung nicht nur für die Durchführung einer Härtemessung, sondern auch für die Ermittlung einer Kratzfestigkeit einer Oberfläche des Prüfkörpers.

Das Halteelement ist in seiner Erstreckungsebene zumindest in Richtung der Auslenkung des Eindringkörpers weich und in einer Richtung senkrecht dazu steif und vorzugsweise in der zweiten Richtung weich ausgebildet ist. Dadurch kann insbesondere bei der Durchführung einer Kratzfestigkeitsmessung ein weiterer Parameter neben der Eindringtiefe erfasst werden, und zwar die seitliche Auslenkung, um eine verbesserte Auswertung zu ermöglichen.

Das Halteelement ist bevorzugt aus Kupfer-Beryllium ausgebildet. Dieses Material ist besonders geeignet, da es nahezu hysteresefrei ist. Dadurch ist eine direkte und verlustfreie Ansteuerung des Eindringkörpers möglich.

Des Weiteren arbeitet die erste Messeinrichtung bevorzugt nach dem Wirbelstromprinzip. Hierbei handelt es sich um eine bewährte und rückwirkungsfreie Messeinrichtung, die auch eine kompakte Bauweise ermöglicht. Beispielsweise kann eine Ferritplatte oder ein Ferritring als bewegbares zweites Sensorelement an dem Übertragungsstift und an einem Gehäuse als erstes feststehendes Sensorelement eine Topfspule, vorzugsweise lösbar, insbesondere durch eine Schraubverbindung, befestigt sein.

Analoges gilt bevorzugt für die zweite beziehungsweise weitere Messvorrichtung, die ebenfalls nach dem Wirbelstromprinzip arbeitet. Beispielsweise kann diese zweite Messeinrichtung eine Auslenkung des Eindringkörpers in X-Richtung - also senkrecht zur Eindringbewegung des Eindringkörpers in Z-Richtung - erfassen. Dadurch kann eine Auslenkung des Eindringkörpers beziehungsweise des Übertragungsstiftes entlang der Verfahrrichtung des Probekörpers bei einer Messung der Kratzfestigkeit des Probekörpers erfasst werden. Alternativ können auch zwei Sensorelemente am Gehäuse einem Sensorelement am Übertragungselement zugeordnet sein, die um 180° zueinander versetzt sind. Zum einen kann eine Auslenkung des Übertragungsstiftes entlang des Verfahrweges des Probekörpers - also in X-Richtung - und zum anderen in Y-Richtung erfasst werden.

Des Weiteren ist bevorzugt der Eindringkörper auswechselbar an dem Übertragungsstift vorgesehen. Somit kann nicht nur eine schnelle und einfache Anpassung an unterschiedliche Messaufgaben gegeben sein, sondern auch bei einer Beschädigung des Eindringkörpers eine schnelle Auswechslung erfolgen. Gleiches gilt bevorzugt für die an dem Eindringkörper auswechselbar angeordnete Eindringspitze.

Des Weiteren ist die Krafterzeugungseinrichtung als ein piezoelektrischer Antrieb, ein pneumatischer Antrieb, ein hydraulischer Antrieb oder ein elektromagnetischer Antrieb ausgebildet. Alle diese Antriebe ermöglichen die Erzeugung einer Eindringbewegung des Eindringkörpers beziehungsweise eine Hubbewegung, die auf das Übertragungselement übertragen werden können.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht einer erfindungsgemäßen Messanordnung,
Figur 2 eine schematisch vergrößerte Ansicht einer erfindungsgemäßen Messvorrichtung der Messanordnung gemäß Figur 1,
Figur 3 eine schematische Ansicht von unten auf die Messvorrichtung gemäß Figur 2,
Figur 4 eine schematische Schnittansicht der Messvorrichtung gemäß Figur 2 und
Figur 5 eine schematische Schnittansicht einer alternativen Messvorrichtung zu Figur 2.

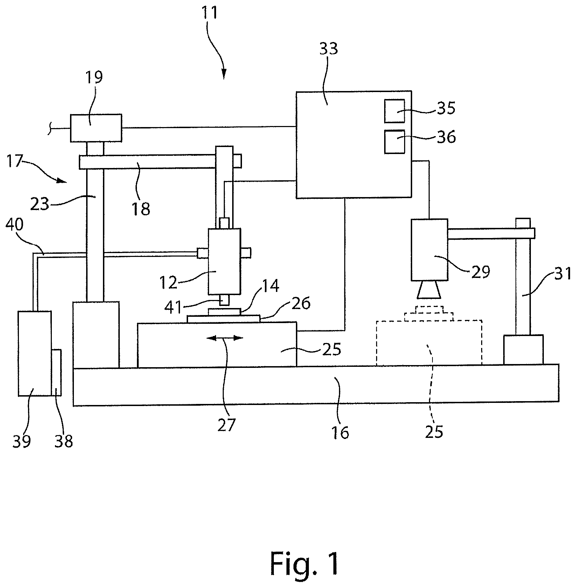

In Figur 1 ist schematisch eine Messanordnung 11 dargestellt. Eine solche Messanordnung 11 kann zum Prüfen von mechanischen und/oder physikalischen Eigenschaften von Oberflächen an Prüfkörpern 14, wie beispielsweise Folien, Schichten und/oder Beschichtungen auf Gegenständen, vorgesehen sein. Beispielsweise kann die Messanordnung 11 als eine Härtemesseinrichtung eingesetzt werden, bei der durch Eindringen mittels eines Eindringkörpers 41 einer Messvorrichtung 12 eine Härtemessung durchgeführt wird. Des Weiteren kann diese
Messanordnung 11 mit der Messvorrichtung 12 dafür vorgesehen werden, um eine Kratzfestigkeit einer Folie, einer Schicht oder Beschichtung auf Gegenständen zu ermitteln. Dabei können beispielsweise CVD- oder PVD-Beschichtungen bezüglich deren Kratzfestigkeit getestet werden. Ebenso können weitere Mikrokratzer erfasst oder anderweitige Verformungsinformationen von der Oberfläche erfasst und analysiert werden. Ebenso ermöglicht diese Messanordnung 11, insbesondere mit der Messvorrichtung 12, auch eine Rauheitsmessung einer Oberfläche des Prüfkörpers 14, ohne dass eine Beschädigung der Oberfläche des Prüfkörpers 14 damit einhergeht. In diesem Fall wird der Eindringkörper 41 auf die Oberfläche des Prüfkörpers 14 aufgesetzt und entlang der Oberfläche zum Abtasten der Rauigkeit dieser Oberfläche des Prüfkörpers verfahren.

Die Messanordnung 11 umfasst einen gemeinsamen Grundkörper 16. Dieser kann bevorzugt aus Granit ausgebildet sein. Auf dem Grundkörper 16 ist ein Stativ 17 vorgesehen, welches an einem Ausleger 18 die Messvorrichtung 12 aufnimmt. Dieses Stativ 12 umfasst einen Antriebsmotor 19, durch welchen die Messvorrichtung 12 aus einer in Figur 1 dargestellten Ausgangsposition 21 in eine Prüfposition 22 verfahrbar ist, in welcher der Eindringkörper 41 auf einem Prüfkörper 14 aufliegt. Beispielsweise kann der Antriebsmotor 19 den Ausleger 18 für eine auf und ab Bewegung entlang einer Führungssäule 23 des Stativs 12 antreiben.

Auf dem Grundkörper 16 ist des Weiteren ein Messtisch 25 vorgesehen. Dieser Messtisch 25 weist eine Messtischaufnahme 26 auf, welche zumindest in X-Richtung gemäß Pfeil 27 verfahrbar angetrieben ist. Auf die Messtischaufnahme 26 wird der Prüfkörper 14 aufgelegt und daran befestigt.

Die Messanordnung 11 kann des Weiteren eine optische Erfassungseinrichtung 29 umfassen, welche ebenfalls an dem Stativ 17 oder vorteilhafterweise getrennt dazu an einem weiteren Stativ 31 angeordnet sein kann. Diese optische Erfassungseinrichtung 29 kann benachbart zur Messvorrichtung 12 positioniert sein. Der Messtisch 25 oder die Messtischaufnahme 26 ist dabei derart verfahrbar ausgestaltet, dass der Prüfkörper 14 nach dem Einbringen einer Eindringstelle oder eines Kratzers in die Oberfläche des Prüfkörpers 14 zur optischen Erfassungseinrichtung 29 verfahrbar ist, damit die Eindringstelle oder der eingebrachte Kratzer in die Oberfläche des Prüfkörpers 14 optisch erfasst werden kann. Alternativ kann auch eine Verfahrbewegung der Messvorrichtung 12 und der optischen Erfassungseinrichtung 29 relativ zum Messtisch 25 vorgesehen sein.

Die Messanordnung 11 umfasst des Weiteren eine schematisch dargestellte Steuerung 33, welche eine nicht näher dargestellte Datenverarbeitungseinrichtung, eine Anzeigevorrichtung 35 und eine Eingabevorrichtung 36 umfasst. Die Steuerung 33 ist zumindest durch Signalleitungen mit dem Stativ 17, der Messvorrichtung 12 und dem Messtisch 25 verbunden. Bevorzugt ist auch die optische Erfassungseinrichtung 29 und gegebenenfalls das die optische Erfassungseinrichtung 29 aufnehmende Stativ 31 daran angeschlossen.

Die Messanordnung 11 weist des Weiteren zur Ansteuerung der Messvorrichtung 12 zumindest eine Pumpe 38 auf, durch welche ein Druckmedium der Messvorrichtung 12 zugeführt wird, um eine Eindringbewegung des Eindringkörpers 41 der Messvorrichtung 12 anzusteuern. Diese Pumpe 38 ist mit einer Signalleitung mit der Steuerung 33 verbunden. Vorteilhafterweise kann die Pumpe 33 das Druckmedium einem Speicherbehälter 39 zuführen, von welchem aus das Druckmedium über eine Förderleitung 40 der Messvorrichtung 12 zugeführt wird. Sowohl die Pumpe 38 als auch der Speicherbehälter 39 sind nicht auf dem gemeinsamen Grundkörper 16 angeordnet.

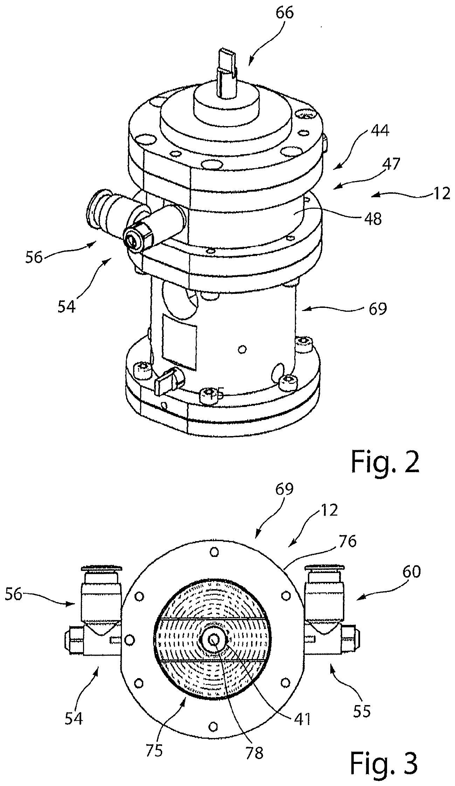

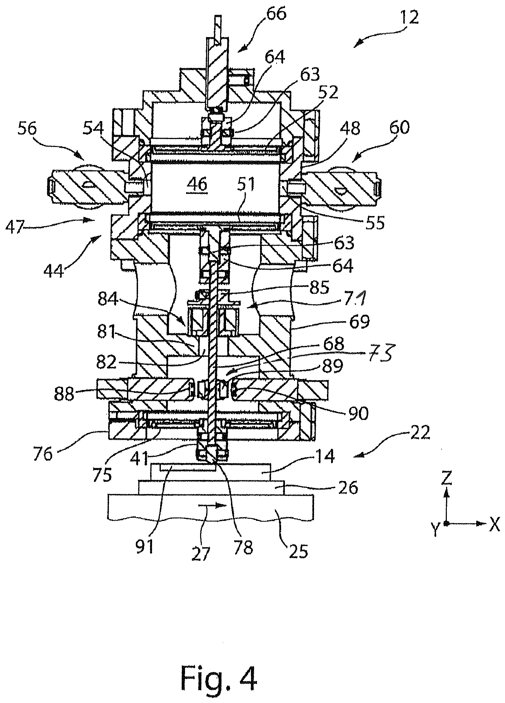

In Figur 2 eine perspektivische Ansicht der erfindungsgemäßen Messvorrichtung 12 dargestellt. Die Figur 3 zeigt eine Ansicht von unten. In Figur 4 ist eine schematische Schnittansicht der Messvorrichtung 12 gemäß Figur 2 dargestellt, worauf insbesondere zur Darlegung des Aufbaus näher Bezug genommen wird.

Diese Messvorrichtung 12 weist eine Krafterzeugungseinrichtung 44 auf, durch welche eine Verfahrbewegung, insbesondere Eindringbewegung, des Eindringkörpers 41 auf die Oberfläche des Prüfkörpers 14 angesteuert wird. Diese Krafterzeugungseinrichtung 44 umfasst eine Druckkammer 46, welche in einem Gehäuse 47 integriert ist. Dieses Gehäuse 47 weist eine zylindrische Gehäusewand 48 auf, welcher eine erste Druckfläche 51 und eine zweite Druckfläche 52 zugeordnet ist. Diese beiden Druckflächen 51, 52 sind vorteilhafterweise durch eine lösbare Verbindung, insbesondere eine Klemm- oder Schraubverbindung, zur Gehäusewand 48 fixiert. Durch die Gehäusewand 48 und die erste und zweite Druckfläche 51, 52 wird die Druckkammer 46 gebildet. Alternativ kann auch eine geschlossene Druckkammer mit daran angeordneten Anschlüssen eingesetzt werden. An der Gehäusewand 48 sind eine Einlassöffnung 54 und eine Auslassöffnung 55 vorgesehen, so dass ein Druckmedium zu- und abgeführt werden kann.

In der zur Einlassöffnung 54 führenden Förderleitung 40 ist bevorzugt ein Einlasssteuerventil 56 vorgesehen. Alternativ ist das Einlassventil 56 direkt an die Einlassöffnung angeschlossen. Zum Abströmen des Druckmediums aus der Druckkammer 46 ist auslassseitig in einer weiteren Förderleitung 58 ein Auslasssteuerventil 60 angeordnet. Dies kann auch direkt an der Auslassöffnung 55 angeschlossen sein.

Die erste und zweite Druckfläche 51, 52 sind bevorzugt als eine Druckmembran, insbesondere gewellte Druckmotoren mit bevorzugt kreisförmigen Wellen, ausgebildet, welche nur in einer Bewegungsrichtung einen Freiheitsgrad aufweisen, der in Z-Richtung ausgerichtet ist und in einer Längsmittelachse 61 der Messvorrichtung 12 liegt. Durch die Einspannung der ersten und zweiten Druckfläche 51, 52 ist eine Drehung der Druckflächen 51, 52 um die Z-Achse verhindert.

An jeder der ersten und zweiten Druckfläche 51, 52 ist ein Druckstempel 63 fest angeordnet. Über ein Verbindungselement 64 kann beispielsweise der zweiten Druckfläche 52 zugeordnet ein Sensor 66 befestigt sein. Insbesondere ist der Sensor 66 als Drucksensor ausgebildet, der in Abhängigkeit der Bewegung der zweiten Druckfläche 52 den sich in der Druckkammer 46 befindenden Druck erfasst und an die Steuerung 33 weiterleitet.

Zwischen der ersten Druckfläche 51 und dem Eindringkörper 41 ist ein Übertragungselement 68 vorgesehen, der sich durch einen Gehäuseabschnitt 69 erstreckt, welcher sich an die Gehäusewand 47 anschließt. Dieser Gehäuseabschnitt 69 ist zylindrisch ausgebildet, so dass darin eine erste Messvorrichtung 71 zur Erfassung einer Verfahrbewegung in Z-Richtung des Eindringkörpers 41 vorgesehen ist. Des Weiteren ist in dem Gehäuseabschnitt 69 bevorzugt eine weitere Messvorrichtung 73 angeordnet, welche zumindest eine Auslenkung in X-Richtung des Eindringkörpers 41 während einem Eindringen in die Oberfläche des Prüfkörpers 25 erfasst. Dies kann vorzugsweise auch bei einer gleichzeitigen Verfahrbewegung des Prüfkörpers 14 in X-Richtung erfolgen. Des Weiteren kann die zumindest eine weitere Messvorrichtung 73 auch eine Auslenkung des Eindringkörpers 41 in Y-Richtung erfassen.

An dem unteren Gehäuseabschnitt 69 ist ein Halteelement 57 vorgesehen, welches den Eindringkörper 41 aufnimmt und sich bis zu einem äußeren Randbereich 76 am Gehäuseabschnitt 69 erstreckt. Dieses Halteelement 75 kann wiederum mit einer lösbaren Verbindung am Gehäuseabschnitt 69 befestigt sein. Das Halteelement 75 ist als eine Druckmembran ausgebildet, welche in zumindest einer Bewegungsrichtung einen Freiheitsgrad aufweist. Dieser zumindest eine Freiheitsgrad liegt in der Z-Achse beziehungsweise der Längsmittelachse 61 der Messvorrichtung 12. Das Halteelement 47 ist bevorzugt, wie dies in Figur 3 dargestellt ist, mit zwei Längsschlitzen versehen. Dadurch wird das Halteelement 75 in einer Richtung parallel zu den Längsschlitzen, welche der X-Achse entsprechen, weich und in einer Y-Achse steif. Da die Haltevorrichtung 75 als Druckmedium ausgebildet ist, weist diese eine sehr geringe Nachgiebigkeit auf und ist bevorzugt nicht in X- und Y-Richtung drucksteif ausgebildet.

Am unteren Ende des Übertragungselementes 68 ist der Eindringkörper 41 auswechselbar befestigt. Der Eindringkörper 41 weist eine Eindringspitze 78 auf, welche lösbar an dem Eindringkörper 41 befestigbar ist.

Der Gehäuseabschnitt 69 weist eine Schulter 81 auf, welche eine Durchgangsbohrung 82 bildet, durch welche sich das Übertragungselement 68 erstreckt. An der Schulter 81 ist ein erstes Sensorelement 84 der ersten Messeinrichtung 71 fest angeordnet, und benachbart dazu ist ein zweites Sensorelement 85 der ersten Messeinrichtung an dem Übertragungselement 68 angeordnet. Beispielsweise sind das erste und zweite Sensorelement 84, 85 als Abstandssensor ausgebildet, wobei das erste Sensorelement 84 einen Topfmagnet mit einer Spule umfasst und das zweite Sensorelement 85 eine Scheibe aus einem ferritischen Material ist, welches an dem Übertragungselement 68 befestigt ist. Dieses zweite Sensorelement 85 ist bevorzugt lösbar am Übertragungselement 68 und im Abstand zum ersten Sensorelement 84 einstellbar, so dass eine Justierung des Eindringkörpers 41 in einer Ausgangsposition möglich ist. Die Messeinrichtung 71 arbeitet nach dem Wirbelstromprinzip.

Die weitere Messeinrichtung 73 umfasst ein an einer Halterung 87 angeordnetes erstes Sensorelement 88, welches ortsfest beziehungsweise gehäusefest vorgesehen ist sowie ein zweites Sensorelement 89, welches wiederum an dem Übertragungselement 68 angreift. Gemäß einer ersten Ausführungsform kann dieses zweite Sensorelement 89 als Ferritring ausgebildet sein, dem eine Spule gegenüberliegt, die das erste Sensorelement 88 bildet. Dadurch kann eine Ablenkung des Eindringkörpers 41 in X-Richtung erfasst werden, welche während dem Einbringen der Eindringstelle oder eines Kratzers 91 durch die Oberfläche auf den Eindringkörper 41 erzeugt und auf den Übertragungselement 68 übertragen wird. Ergänzend kann auch noch ein drittes Sensorelement 90 vorgesehen sein, um eine Ablenkung in X-Richtung zu erfassen, so dass durch einen Vergleich der erfassten Werte zum ersten und dritten Sensorelement 88, 90 eine verbesserte Aussage über die Abweichung in X-Richtung ermittelt werden kann. Alternativ kann das dritte Sensorelement 90 auch um 90° versetzt zum ersten Sensorelement 88 angeordnet sein, so dass das erste Sensorelement 88 eine Ablenkung in X-Richtung und das zweite Sensorelement 89 eine Ablenkung in Y-Richtung erfasst.

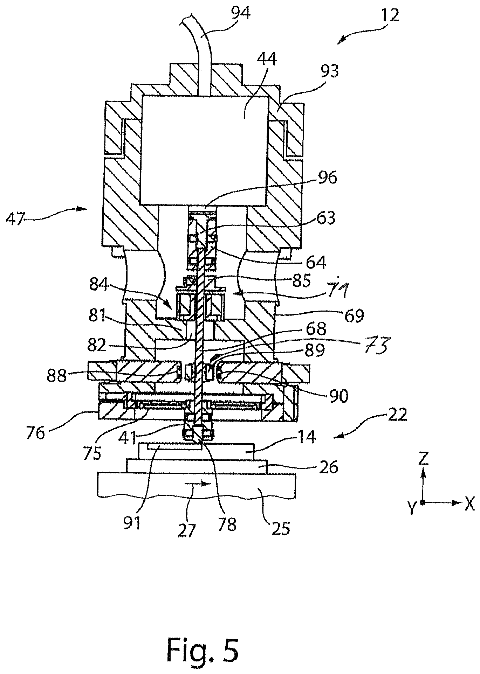

In Figur 5 ist eine alternative Ausführungsform der Messvorrichtung 11 zu Figur 4 dargestellt. Diese Ausführungsform weicht dahingehend von der Ausführungsform gemäß Figur 4 ab, dass die Krafterzeugungseinrichtung 44 durch beispielsweise einen piezoelektrischen Antrieb ausgebildet ist. Bei dieser Ausführungsform vereinfacht sich dadurch das Gehäuse 47. Dieser piezoelektrische Antrieb 44 wird in den Gehäuseabschnitt 69 eingesetzt und mittels eines Verschlusses 93 fixiert. Eine elektrische Anschlussleitung 94 ist aus dem Verschluss 93 herausgeführt. Dieser piezoelektrische Antrieb weist ein Stellglied 96 auf, welches beispielsweise als eine Druckplatte, ein Stempel oder dergleichen ausgebildet ist. An diesem Stellglied 96 ist bevorzugt das Verbindungselement 64 angeordnet oder befestigt, so dass eine Anschlussstelle oder Einkoppelstelle zwischen dem piezoelektrischen Antrieb und dem Übertragungselement 68 beziehungsweise Übertragungsstift gegeben ist.

Ein weiterer alternativer Antrieb kann ebenso in analoger Weise wie der piezoelektrische Antrieb in dem Gehäuseabschnitt 69 angeordnet und mit einem Verschluss 63 dazu fixiert sein.

## Patentansprüche

1. Messvorrichtung zur Erfassung von Messsignalen während einer Eindringbewegung eines Eindringkörpers (41) in eine Oberfläche eines Prüfkörpers (14) oder während einer Abtastbewegung des Eindringkörpers (41) auf der Oberfläche des Prüfkörpers (14), mit einem Gehäuse (47), welches eine Krafterzeugungseinrichtung (44) aufnimmt und an dem ein Halteelement (75) entfernt zur Krafterzeugungseinrichtung (44) angeordnet ist, welches zumindest in einer Richtung entlang einer Längsachse des Gehäuses (47) beweglich zum Gehäuse (47) vorgesehen ist und den Eindringkörper (41) aufnimmt und mit zumindest einer ersten Messeinrichtung (71) zum Messen der Eindringtiefe des Eindringkörpers (41) in die Oberfläche des Prüfkörpers (14) oder einer Verfahrbewegung des Eindringkörpers (41) längs der Längsachse zum Gehäuse (47) während einer Abtastbewegung auf der Oberfläche des Prüfkörpers (14) und zwischen der Krafterzeugungseinrichtung (44) und dem Eindringkörper (41) ein sich erstreckendes Übertragungselement (68) vorgesehen ist, wobei an dem Gehäuse (47) und zur Krafterzeugungseinrichtung (44) beabstandet das Haltelement (75) vorgesehen ist und in dem Gehäuseabschnitt (69) des Gehäuses (47) ein erstes Sensorelement (84) der ersten Messeinrichtung (71) befestigt ist, welches berührungslos mit einem zweiten Sensorelement (85) der ersten Messeinrichtung (71) kommuniziert und an dem Übertragungselement (68) befestigt ist,
wobei sich das Übertragungselement (68) führungsfrei zwischen der Krafterzeugungseinrichtung (44) und dem Halteelement (75) im Gehäuseabschnitt (69) des Gehäuses (47) erstreckt,
und wobei das Halteelement (75) als Druckmembran ausgebildet ist und eine Bewegungsfreiheit in zumindest einem Freiheitsgrad aufweist, der in der Bewegungsrichtung der Krafterzeugungseinrichtung (44) liegt, **dadurch gekennzeichnet**
- **dass** das Halteelement (75) in seiner Erstreckungsebene zumindest in Richtung der Auslenkung des Eindringkörpers (41) weich und in einer Richtung senkrecht dazu steif ausgebildet ist.

2. Messvorrichtung nach Anspruch 1, **dadurch gekennzeichnet, dass** das Übertragungselement (68) stab- oder stiftförmig ausgebildet ist.

3. Messvorrichtung nach Anspruch 1 oder 2, **dadurch gekennzeichnet, dass** das Übertragungselement (68) durch ein Verbindungselement (64) an der Krafterzeugungseinrichtung (44) befestigbar ist.

4. Messvorrichtung nach Anspruch 1 oder 2, **dadurch gekennzeichnet, dass** das Übertragungselement (68) durch ein Verbindungselement (64) an dem Halteelement (75) und/oder dem Eindringkörper (41) befestigbar ist.

5. Messvorrichtung nach einem der vorhergehenden Ansprüche, **dadurch gekennzeichnet, dass** das Verbindungselement (64) mit einer Aufnahmebohrung gebildet und ein Ende des Übertragungselementes (68) darin befestigbar ist.

6. Messvorrichtung nach einem der vorhergehenden Ansprüche, **dadurch gekennzeichnet, dass** an dem Übertragungselement (68) eine zweite Messeinrichtung (73) im Abstand zur ersten Messeinrichtung (71) vorgesehen ist, wobei ein erstes Sensorelement (88, 90) der zweiten Messvorrichtung (73) an dem Gehäuseabschnitt (69) des Gehäuses (47) befestigbar und das zweite Sensorelement (89) der zweiten Messeinrichtung (73) am Übertragungselement (68) anordenbar ist.

7. Messvorrichtung nach einem der vorhergehenden Ansprüche, **dadurch gekennzeichnet, dass** das Haltelement (75) aus Kupfer-Beryllium besteht.

8. Messvorrichtung nach einem der vorhergehenden Ansprüche, **dadurch gekennzeichnet, dass** die erste Messvorrichtung (71) und/oder die zweite Messvorrichtung (73) nach dem Wirbelstromprinzip arbeiten.

9. Messvorrichtung nach einem der vorhergehenden Ansprüche, **dadurch gekennzeichnet, dass** der Eindringkörper (41) auswechselbar an dem Übertragungsstift (68) und/oder die Eindringspitze (78) auswechselbar an dem Eindringkörper (41) angeordnet ist.

10. Messvorrichtung nach einem der vorhergehenden Ansprüche, **dadurch gekennzeichnet, dass** die Krafterzeugungseinrichtung als ein piezoelektrischer Antrieb, ein pneumatischer Antrieb, ein hydraulischer Antrieb oder ein elektromagnetischer Antrieb ausgebildet ist.

## Claims

1. Measuring device for detecting measurement signals during a penetration movement of a penetration body (41) into a surface of a test body (14) or during a scanning movement of the penetration body (41) on the surface of the test body (14), having a housing (47) which accommodates a force generating apparatus (44) and on which a holding element (75) is arranged spaced apart from the force generating apparatus (44), said holding element being provided to be moveable relative to the housing (47) at least in one direction along a longitudinal axis of the housing (47) and accommodating the penetration body (41), and having at least one first measuring apparatus (71) for measuring the depth of penetration of the penetration body (41) into the surface of the test body (14) or of a travelling movement of the penetration body (41) along the longitudinal axis towards the housing (47) during a scanning movement on the surface of the test body (14), and an extending transmission element (68) is provided between the force generating apparatus (44) and the penetration body (41), wherein the holding element (75) is provided on the housing portion (69) of the housing (47) and at a distance from the force generating apparatus (44), and a first sensor element (84) of the first measuring device (71) is fastened in the housing portion (69) of the housing (47), which is communicating in a non-touching manner with a second sensor element (85) of the first measuring device (71) and being fastened to the transmission element (68),
- wherein the transmission element (68) extends between the force generating apparatus (44) and the holding element (75) in the housing portion (69) of the housing (47) without guidance, and
- wherein the holding element (75) is formed as a pressure membrane and has a freedom of movement in at least one degree of freedom, in the movement direction of the force generating apparatus (44) **characterized in**
- **that** the holding element (75) is formed to be soft in its extension plane at least in the direction of the displacement of the penetration body (41) and rigid in a direction perpendicular thereto.

2. Measuring device according to claim 1, **characterised in that** the transmission element (68) is formed to be rod- or pin-shaped.

3. Measuring device according to claim 1 or 2, **characterised in that** the transmission element (68) is fastenable to the force generating apparatus (44) by a connection element (64).

4. Measuring device according to claim 1 or 2, **characterised in that** the transmission element (68) is fastenable to the holding element (75) and/or the penetration body (41) by a connection element (64).

5. Measuring device according to one of the preceding claims, **characterised in that** the connection element (64) is formed with an accommodating bore and an end of the transmission element (68) is fastenable therein.

6. Measuring device according to one of the preceding claims, **characterised in that** a second measuring device (73) is provided on the transmission element (68) at a distance to the first measuring device (71), wherein a first sensor element (88, 90) of the second measuring device (73)is arrangeable on the housing (47) or the housing portion (69) of the housing (47) and the second sensor element (98) of the second measuring device (73) is arrangeable on the transmission element (68).

7. Measuring device according to one of the preceding claims, **characterised in that** the holding element (75) consists of copper beryllium.

8. Measuring device according to one of the preceding claims, **characterised in that** the first measuring device (71) and/or the second measuring device (73) operate according to the eddy current principle.

9. Measuring device according to one of the preceding claims, **characterised in that** the penetration body (41) is arrangeable exchangeably on the transmission pin (68) and/or the penetration tip (78) is arrangeable exchangeably on the penetration body (41) .

10. Measuring device according to one of the preceding claims, **characterised in that** the force transmission device is formed as a piezoelectric drive, a pneumatic drive, a hydraulic drive or an electromagnetic drive.

## Revendications

1. Dispositif de mesure destiné à saisir des signaux de mesure pendant un mouvement de pénétration d'un corps de pénétration (41) dans une surface d'un corps testé (14) ou pendant un mouvement de balayage du corps de pénétration (41) sur la surface du corps testé (14), pourvu d'un boîtier (47) qui abrite un dispositif générateur de force (44) et sur lequel est disposé de manière éloignée du dispositif générateur de force (44) un élément de retenue (75) qui est prévu de manière à pouvoir se déplacer par rapport au boîtier (47) au moins dans une direction le long d'un axe longitudinal dudit boîtier (47) et qui reçoit le corps de pénétration (41), et pourvu d'au moins un premier organe de mesure (71) destiné à mesurer la profondeur de pénétration du corps de pénétration (41) dans la surface du corps testé (14) ou destiné à mesurer un mouvement de déplacement du corps de pénétration (41) le long de l'axe longitudinal du boîtier (47) pendant un mouvement de balayage sur la surface du corps testé (14), et dans lequel est prévu un élément de transmission (68) qui s'étend entre le dispositif générateur de force (44) et le corps de pénétration (41), l'élément de retenue (75) étant prévu sur le boîtier (47) à une distance donnée du dispositif générateur de force (44), et dans la partie de boîtier (69) du boîtier (47) étant fixé un premier élément capteur (84) du premier organe de mesure (71) qui communique sans contact avec un deuxième élément capteur (85) dudit premier organe de mesure (71) et qui est fixé à l'élément de transmission (68),
l'élément de transmission (68) s'étendant librement dans la partie de boîtier (69) du boîtier (47), entre le dispositif générateur de force (44) et l'élément de retenue (75),
et l'élément de retenue (75) étant réalisé en tant que membrane de pression et présentant une liberté de mouvement à au moins un degré de liberté qui se situe dans le sens de déplacement du dispositif générateur de force (44),
**caractérisé en ce que**
- l'élément de retenue (75) dans son plan d'extension est réalisé de manière souple au moins dans la direction de déviation du corps de pénétration (41) et de manière rigide dans une direction perpendiculaire à celle-ci.

2. Dispositif de mesure selon la revendication 1, **caractérisé en ce que** l'élément de transmission (68) est réalisé sous forme de barre ou de tige.

3. Dispositif de mesure selon la revendication 1 ou 2, **caractérisé en ce que** l'élément de transmission (68) peut être fixé au dispositif générateur de force (44) à l'aide d'un élément d'assemblage (64).

4. Dispositif de mesure selon la revendication 1 ou 2, **caractérisé en ce que** l'élément de transmission (68) peut être fixé à l'élément de retenue (75) et/ou au corps de pénétration (41) à l'aide d'un élément d'assemblage (64).

5. Dispositif de mesure selon l'une quelconque des revendications précédentes, **caractérisé en ce que** l'élément d'assemblage (64) est réalisé avec un trou de fixation et qu'une extrémité de l'élément de transmission (68) peut est fixée dans celui-ci.

6. Dispositif de mesure selon l'une quelconque des revendications précédentes, **caractérisé en ce que** sur l'élément de transmission (68) est prévu un deuxième organe de mesure (73) situé à une distance donnée du premier organe de mesure (71), un premier élément capteur (88, 90) du deuxième organe de mesure (73) pouvant être fixé sur la partie de boîtier (69) du boîtier (47), et le deuxième élément capteur (89) du deuxième organe de mesure (73) pouvant être disposé sur l'élément de transmission (68) .

7. Dispositif de mesure selon l'une quelconque des revendications précédentes, **caractérisé en ce que** l'élément de retenue (75) est constitué en cuprobéryllium.

8. Dispositif de mesure selon l'une quelconque des revendications précédentes, **caractérisé en ce que** le premier organe de mesure (71) et/ou le deuxième organe de mesure (73) fonctionnent selon le principe des courants de Foucault.

9. Dispositif de mesure selon l'une quelconque des revendications précédentes, **caractérisé en ce que** le corps de pénétration (41) est disposé de manière échangeable sur la tige de transmission (68) et/ou la pointe de pénétration (78) est disposée de manière échangeable sur le corps de pénétration (41) .

10. Dispositif de mesure selon l'une quelconque des revendications précédentes, **caractérisé en ce que** le dispositif générateur de force est réalisé sous la forme d'un entraînement piézoélectrique, d'un entraînement pneumatique, d'un entraînement hydraulique ou d'un entraînement électromagnétique.
